# EUROPÄISCHE PATENTSCHRIFT

(11) **EP 2 026 951 B1**
(45) Veröffentlichungstag und Bekanntmachung des Hinweises auf die Patenterteilung: **16.08.2017**
(21) Anmeldenummer: 07722511.8
(22) Anmeldetag: 05.06.2007
(51) Int. Cl.: B29C 65/04

(54) **WERKZEUG ZUM HF-VERSCHWEISSEN, ANORDNUNG EINER MANDRENE UND VERWENDUNG EINER MANDRENE**
TOOL FOR RF WELDING, ARRANGEMENT OF A CENTRAL ELECTRODE AND USE OF A CENTRAL ELECTRODE
OUTIL DE SOUDAGE HF, ARRANGEMENT D'UNE ELECTRODE CENTRALE ET UTILISATION D'UNE ELECTRODE CENTRALE

(30) Priorität: 08.06.2006 DE 102006026697
(43) Veröffentlichungstag der Anmeldung: 25.02.2009
(60) Teilanmeldung: 16000171.5
(73) Patentinhaber: Kiefel GmbH, 83395 Freilassing (DE)
(72) Erfinder: HINTERSEER, Heinz, 83395 Freilassing (DE)
(74) Vertreter: Farago, Peter Andreas
(86) Internationale Anmeldenummer: PCT/DE2007/000998
(87) Internationale Veröffentlichungsnummer: WO 2007/140760

(56) Entgegenhaltungen:
- GB-A- 2 434 337
- JP-A- 62 034 563
- JP-A- 63 290 568
- ABELE: "Kunststoff-Fügeverfahren" 1977, CARL HANSER VERLAG , MÜNCHEN , XP002462978 in der Anmeldung erwähnt Abbildungen 243(b,c) Seiten 188-191

## Beschreibung

Die Erfindung betrifft ein Werkzeug zum HF-Verschweißen eines Einsetzteils mit zwei Folien zu einem Beutel, die Anordnung mindestens zweier Zentralelektroden an einem solchen Werkzeug und die Verwendung eines solchen Werkzeugs in einem HF-Schweißverfahren.

Hochfrequenzschweißen, kurz als HF-Schweißen bezeichnet, ist eine Schweißtechnik, bei welcher hochfrequente Energie in den Bereich eingeleitet wird, der verschweißt werden soll. Die resultierende Verschweißung ist sehr stabil. Insbesondere kann sie wasserdicht sein.

HF-Schweißverfahren werden häufig eingesetzt, um Folien miteinander zu einem luft- oder wasserdichten Beutel oder Schlauch zu verschweißen. In der Medizinprodukttechnik werden auf diese Weise Beutel hergestellt, in welche eine schlauchförmige Öffnung eingesetzt ist. Hierzu werden in der Regel ein Kunststoffröhrchen mit zwei Folien sowie die beiden Folien miteinander verschweißt.

Abele, Kunststoff-Fügeverfahren, Carl Hanser Verlag München, 1977, zeigt mehrere Verfahren dieser Art. So ist in der dortigen Abbildung 243b eine Elektrodenanordnung gezeigt, bei welcher die Elektrode am Unterwerkzeug einstückig ausgeführt ist, während die Elektrode am Oberwerkzeug dreistückig ausgeführt ist. Zusätzlich ist eine Zentralelektrode (auch "Mandrene" genannt) vorhanden. Mit diesem Werkzeug können in einem Schweißvorgang sowohl eine Schweißverbindung zwischen einzuschweißenden Röhrchen und zwei Folien als auch zwischen den beiden Folien untereinander erstellt werden.

Weiter ist es bekannt, eine Verschweißung zwischen einem Röhrchen und zwei Folien in zwei nacheinander geschalteten Arbeitsschritten durchzuführen: Zunächst wird die Zentralelektrode mit Hochfrequenz beaufschlagt, während das einteilige Oberwerkzeug und das einteilige Unterwerkzeug jeweils auf Masse geschaltet werden. Dies erzeugt eine Verschweißung am Umfang des Röhrchens. Im zweiten Schritt wird zwischen den Folien eine Verschweißung hergestellt, oft entlang eines Beutelumfangs. Hierzu wird das Oberwerkzeug mit einer anderen Polarität beaufschlagt als das Unterwerkzeug, während die Zentralelektrode neutral geschaltet wird. Die dadurch entstehende Verschweißung zwischen den beiden Folien erfolgt entweder sofort entlang des gesamten Beutelumfangs oder zunächst in einem kleinen Bereich seitlich des eingeschweißten Schlauches, dann mit einem Beutelumfangsschweißwerkzeug entlang des Beutelumfangs. Im letzteren Falle überlappen sich die beiden Schweißbereiche hinsichtlich der Folien, um eine dichte Verbindung herzustellen.

Generell ist bei der Anwendung von HF-Schweißverfahren zum Einschweißen eines Gegenstands in zwei Folien zu unterscheiden zwischen einem kleinen Röhrchen, welches zwischen zwei Folien eingeschweißt werden soll, und längeren Gegenständen oder Vollprofilgegenständen, welche eingeschweißt werden sollen.

Wenn ein kurzes Röhrchen zwischen zwei Folien eingeschweißt werden soll, wird zum Verschweißen oft eine Zentralelektrode in das Röhrchen eingeführt. Wenn ein langes Röhrchen eingeschweißt werden soll, in welches aus technisch-praktischen Gründen eine Zentralelektrode nicht eingeführt werden kann, oder wenn ein Vollprofilgegenstand wie beispielsweise ein Kabel eingeschweißt werden soll, kommen Werkzeuge ohne Zentralelektroden zum Einsatz.

Bei Schweißverfahren mit einer Zentralelektrode erfolgt die Schweißung sowohl über Hauptfelder zwischen den Elektroden als auch über Streufelder, welche sich an den Rändern der Elektroden ausbilden. Bei Schweißverfahren ohne Zentralelektroden hingegen erfolgen die Schweißvorgänge mit dem Kabel oder ähnlichen Gegenständen weitestgehend nur über Streufelder.

Die letztgenannten Verfahren, nämlich Kabeleinschweißungen mit HF-Schweißverfahren, beschreibt Abele in einem Folgebuch auf den Seiten 469, 470.

Die JP 63290568 der Kawasumi Lab Inc. offenbart ein Verfahren zum Einschweißen eines schlauchförmigen Einsetzstücks zwischen zwei Folien. Dazu werden die zwei Folien übereinander gelegt, und im Sandwich dazwischen wird ein einzuschweißendes Röhrchen gelegt. In das Röhrchen wird eine Zentralelektrode geführt. An der Spitze der Zentralelektrode sitzt eine isolierende Kappe. Dies führt dazu, dass beim Verschweißen die Elektroden hochfrequentig beaufschlagt werden, und zwar die Zentralelektrode mit einer Polarität, zwei Formelektroden hingegen mit der anderen Polarität. Das Röhrchen wird dadurch fest eingeschweißt.

Der Erfindung liegt die Aufgabe zu Grunde, Verbesserungen hinsichtlich HF-Schweißverfahren zur Verfügung zu stellen.

Nach einem ersten Aspekt der Erfindung löst diese Aufgabe ein Werkzeug zum HF-Verschweißen eines Einsetzteils mit zwei Folien zu einem Beutel, mit einem Oberwerkzeug, einem Unterwerkzeug und mehreren Zentralelektroden, wobei sich das Werkzeug dadurch gekennzeichnet, dass jede der Zentralelektroden mehrere Elektroden aufweist, welche als unterschiedliche Elektroden ausgestaltet und so am Werkzeug angeschlossen sind, dass sie sich unterschiedlich polarisieren lassen.

Der erste Aspekt der Erfindung bezieht sich also auf HF-Schweißverfahren, bei welchen insbesondere kurze Röhrchen mit Folien verschweißt werden. Dies lässt sich daran festmachen, dass eine Zentralelektrode eingesetzt wird. Die Verschweißung erfolgt somit über Hauptfelder und Streufelder.

Während eine Zentralelektrode herkömmlich als eine einheitliche Elektrode ausgebildet war, wird nun vorgeschlagen, mehrere unterschiedliche Elektroden als Zentralelektroden in das Röhrchen einzuführen. Die unterschiedlichen Elektroden sollen so am Werkzeug angeschlossen sein, dass sie sich unterschiedlich polarisieren lassen.

Vorteilhaft kann hierdurch erreicht werden, dass mit nur einem Schweißvorgang eine Verschweißung hinsichtlich des gesamten Umfangs des Röhrchens mit den Folien und gleichzeitig der Folien untereinander erfolgt. Wenn beispielsweise das Oberwerkzeug mit HF beaufschlagt wird, jedoch eine Elektrode der Zentralelektrode, welche zum Oberwerkzeug gerichtet ist, mit Masse, dann entsteht ein Hauptfeld zwischen dem Oberwerkzeug und jener Elektrode der Zentralelektrode, sodass eine Verschweißung entlang der oberen Umfangshälfte des Röhrchens erfolgt. Wenn gleichzeitig das Unterwerkzeug mit Masse beaufschlagt wird, entsteht ein weiteres Hauptfeld zwischen dem Oberwerkzeug und dem Unterwerkzeug. Dies bewirkt ein Verschweißen der beiden Folien miteinander, und zwar - je nach Größe und Ausgestaltung des Werkzeugs - entweder nur im Bereich direkt neben dem Röhrchen oder entlang des gesamten Beutelumfangs. Wenn gleichzeitig eine zum Unterwerkzeug gerichtete Elektrode der Zentralelektrode mit HF beaufschlagt wird, entsteht auch am zum Unterwerkzeug gerichteten Umfang des Röhrchens ein Hauptfeld, sodass auch dort eine dichte Verschweißung erreicht wird.

Es versteht sich, dass die Potentiale auch andersherum angeordnet sein können.

Nach dem Stand der Technik musste unabhängig davon, ob der Beutelumfang sogleich mit demselben Werkzeug verschweißt wird wie das Röhrchen, zumindest eine Umschaltung der Potentiale erfolgen. Die Erfindung macht dies unnötig. Es ist nun möglich, das Röhrchen an seinem Umfang mit den Folien und gleichzeitig die Folien untereinander zu verschweißen, und zwar unabhängig davon, ob die Folien untereinander zunächst nur im Umgebungsbereich des Röhrchens und sodann mit einem Beutelumfangswerkzeug oder aber sogleich entlang des gesamten Beutelumfangs verschweißt werden sollen.

Nach einem Aspekt löst die gestellte Aufgabe ein Werkzeug zum HF-Verschweißen eines Einsetzteils mit zwei Folien zu einem Beutel, mit einem Oberwerkzeug, einem Unterwerkzeug und einer Zentralelektrode, wobei die Zentralelektrode eine elektrische Teilung aufweist.

Es versteht sich, dass eine Zentralelektrode mit einer elektrischen Teilung ohne weiteres so eingesetzt werden kann, dass neben der elektrischen Teilung unterschiedliche Polaritäten innerhalb der Zentralelektrode erzeugt werden. Dies macht eine Zentralelektrode mit elektrischer Teilung einem Verfahren wie vorstehend beschrieben zugänglich.

Nach einem Aspekt löst die gestellte Aufgabe ein Werkzeug zum HF-Verschweißen eines Einsetzteils mit zwei Folien zu einem Beutel mit einen Oberwerkzeug, einem Unterwerkzeug und einer Zentralelektrode, wobei vier Elektroden vorgesehen sind, welche eine dichte Verschweißung zwischen den Folien und dem Einsetzteil in einem einzigen Schweißvorgang ermöglichen.

Während Abele, 1977, in der dortigen Abbildung 243b fünf Elektroden vorsieht, sieht er in der Abbildung 243a nur drei Elektroden vor. Die Erfindung hat demgegenüber erkannt, dass die Anordnung von genau vier Elektroden die sofortige dichte Verschweißung in einem Arbeitsgang ermöglicht.

Nach einem Aspekt löst die gestellte Aufgabe ein Werkzeug zum HF-Verschweißen eines Einsetzteils mit zwei Folien zu einem Beutel, mit einem Oberwerkzeug, einem Unterwerkzeug und einer Zentralelektrode, wobei das Werkzeug dazu eingerichtet ist, ein bezüglich einer Trennebene symmetrisches Feld mit symmetrischer Polarität zu erzeugen, wobei mittels des Feldes eine dichte Verschweißung zwischen den Folien und mit dem Einsetzteil in einem Schweißvorgang erreicht wird.

Abele, 1977, sieht in seiner Abbildung 243a zwar ein symmetrisches Feld bezüglich der Ebene zwischen den beiden Folien vor. Er schreibt jedoch deutlich, dass eine dichte Verschweißung zwischen Schlauch und Folien auf diese Weise nicht zu gewährleisten ist. In Abbildung 243b hingegen wird zwar eine dichte Verschweißung am Röhrchen möglich, die Haupt- und Streufelder sind allerdings nicht symmetrisch ausgebildet. Dies lässt sich bereits daran erkennen, dass das Oberwerkzeug elektrisch anders aufgebaut ist als das Unterwerkzeug. Es ist offensichtlich, dass bei einem symmetrischen Aufbau eine gleichmäßigere Verschweißung erreicht wird.

In Abbildung 243c werden zwar symmetrische Felder erzeugt und eine dichte Verschweißung erreicht, es sind allerdings zwei Schweißvorgänge notwendig.

Nach einem Aspekt löst die gestellte Aufgabe ein Werkzeug zum HF-Verschweißen eines Einsetzteils mit zwei Folien zu einem Beutel, mit einem Oberwerkzeug, einem Unterwerkzeug und einer Zentralelektrode, wobei Elektroden des Werkzeugs dazu eingerichtet sind, gleichzeitig drei Hauptfelder zu erzeugen, wovon eines die beiden Folien miteinander verschweißt, die anderen beiden hingegen das Einsetzteil mit den Folien, und zwar an unterschiedlichen Oberflächenbereichen des Einsetzteils.

Es versteht sich, dass die Merkmale der fünf vorstehend beschriebenen Erfindungsaspekte sowohl unabhängig voneinander als auch in beliebiger Kombination miteinander von Vorteil sind.

Bevorzugt weist die Zentralelektrode zwei Zentralelektrodenelektroden auf, welche das Werkzeug unterschiedlich zu polarisieren eingerichtet ist.

Zwei Zentralelektrodenelektroden sind bevorzugt durch einen Separator elektrisch voneinander getrennt. Ein solcher Separator weist bevorzugt einen nicht leitenden Werkstoff auch, beispielsweise einen Kunststoff. Der Separator kann beispielsweise die Zentralelektrode in zwei symmetrisch zueinander ausgebildete Zentralelektrodenhälften teilen, vor allem wenn ein Einsetzstück symmetrisch zwischen den beiden Folien eingeschweißt werden soll.

Bevorzugt wird die Zentralelektrode bezüglich einer Trennebene zwischen den beiden Folien symmetrisch aufgebaut, also insbesondere sowohl hinsichtlich unterschiedlicher Teile der Zentralelektrode als auch hinsichtlich etwaiger elektrischer Trennungen.

Eine besonders günstige und fertigungstechnisch leicht herzustellende Zentralelektrode besteht aus einem geteilten Rundstab, wobei zwischen den Teilstücken des Rundstabs der Separator angeordnet ist.

Eine alternative Ausgestaltung kann darin bestehen, dass die Zentralelektrode aus einem in Längsrichtung geteilten Rohr mit einer inneren Füllung aus Isoliermaterial aufgebaut ist, wobei der aus Isoliermaterial bestehende Separator auch die einander gegenüberliegenden Rohrwandungen voneinander trennt.

Weiter ist eine Ausgestaltung denkbar, die darin besteht, dass die Zentralelektrode aus einem Stab aus unpolarem Material besteht, auf welchem Elektrodenteilbereiche durch galvanisch leitende Schichten gebildet sind, die an ihren einander gegenüber liegenden längs laufenden Stoßstellen durch eine unpolare Trennschicht voneinander getrennt sind. Diese Trennschicht kann beispielsweise ein Isolierlack sein.

Nach einem zweiten Aspekt der Erfindung löst die gestellte Aufgabe die Anordnung zweier Zentralelektroden der vorstehend beschriebenen Art gemeinsam mit einer Beutelumfangselektrode an einem Werkzeug.

Es sei ausdrücklich darauf hingewiesen, dass ein Schweißwerkzeug mit einer Zentralelektrode wie vorstehend beschrieben nicht nur dazu eingesetzt werden kann, den Schweißvorgang entweder nur des Röhrchens oder des Röhrchens und der Folien im Umgebungsbereich des Röhrchens durchzuführen. Vielmehr lässt sich gemäß dem zweiten Aspekt der Erfindung am selben Werkzeug wie die vorstehend beschriebene, vorteilhafte Zentralelektrode gleichzeitig eine Beutelumfangselektrode installieren.

Es ist das eine, eine Zentralelektrode mit mehrteiligem Aufbau zum Einschweißen des Röhrchens in den Beutelkopf zu verwenden. Technisch und wirtschaftlich deutlich interessanter ist es, sogleich die Beutelumfangselektroden am selben Werkzeug vorzusehen.

HF-Schweißungen von solchen Beuteln können dann in nur einer Schweißpresse, in einer Schweißzeit für Röhrchen und Beutelumfang, und insbesondere bei geeigneter Gestaltung mit nur einem einzigen Generator und geteilter Zentralelektrode durchgeführt werden. Die Zentralelektrode wird in diesem Falle mit einer auf das Beutelumfangsschweißwerkzeug abgestimmten Polarität gespeist.

Nach einem Aspekt löst die gestellte Aufgabe die Verwendung einer wie vorstehend beschrieben ausgebildeten Zentralelektrode gemeinsam mit einer Beutelumfangselektrode an zwei getrennten Werkzeugen für eine Maschine oder an einem einzigen Werkzeug zum dichten Verschweißen des Einsetzstücks und eines Beutelumfangs.

Nach einem dritten Aspekt der Erfindung löst die gestellte Aufgabe die Verwendung einer wie vorstehend beschrieben ausgebildeten Zentralelektrode in einem HF-Schweißverfahren, bei welchem eine Verschweißung zwischen den Folien und mit dem Einsatzteil sowie entlang eines Beutelumfangs erfolgt, insbesondere in einem Arbeitsgang und/oder ohne Wechsel des Werkzeugs.

Nach einem Aspekt löst die gestellte Aufgabe die Verwendung einer Zentralelektrode in einer wie vorstehend beschriebenen Ausbildung in einem HF-Schweißverfahren, bei welchem in einem ersten Schritt eine Verschweißung im Einsetzstückbereich erfolgt, in einem zweiten Schritt sodann eine Verschweißung an einem Beutelumfang.

Eingangs wurde bereits erläutert, dass nicht immer eine Zentralelektrode eingesetzt werden kann. Eine Zentralelektrode lässt sich insbesondere dann nicht verwenden, wenn zwar ein Röhrchen in zwei Folien eingeschweißt werden soll, wenn dieses Röhrchen aber so lang ist, dass eine Zentralelektrode nicht eingeführt werden kann. Außerdem können Zentralelektroden nicht eingesetzt werden, wenn der in die beiden Folien einzuschweißende Gegenstand einen zu kleinen oder gar keinen freien Querschnitt hat. Dies ist beispielsweise bei einem Kabel der Fall.

Wenn es nicht möglich ist, eine Zentralelektrode, also eine irgendwie geartete zentrale Elektrode, innerhalb des Einsetzstücks zu positionieren, werden hohe technische Anforderungen an die Lösung der Aufgabe gestellt, eine dichte Verschweißung entlang des Umfangs des Einsetzstücks zu erreichen.

Man erreicht dies dadurch, dass Elektroden an die Umfangsoberfläche des Einsetzstücks angesetzt werden, wobei zwischen den Elektroden ein Feld im Wesentlichen in Längsrichtung des Einsetzstücks erzeugt wird. Kantenbereiche dieser Elektroden werden unmittelbar an das Einsetzstück angelegt und bevorzugt mit Druck in dessen Oberfläche hineingepresst.

Beim Aktivieren der Elektroden verläuft das Hauptfeld neben dem Einsetzstück her. Allerdings entsteht an den Kanten der Elektroden - und somit an der Umfangsoberfläche des Einsetzstücks - ein Streufeld, welches eine Erwärmung des Werkstoffs bewirkt. Da die Elektroden mit Kraft gegen die Oberfläche gehalten werden, dringen sie in die erwärmte Oberfläche des Einsetzstücks leicht ein. Dies hat zur Folge, dass die Oberfläche zwischen den Elektroden leicht in das Hauptfeld hineingelangt. Auf diese Weise wird eine Verschweißung mittels des Hauptfeldes erreicht.

Dieser Effekt wird gegenüber dem Stand der Technik nach einem Aspekt bei einem Werkzeug zum HF-Verschweißen eines Einsetzteils mit zwei Folien, mit einem Oberwerkzeug und einem Unterwerkzeug, welche jeweils eine Mehrzahl von Elektrodenlamellen aufweisen, die in einer Längsrichtung des Einsetzteils abwechselnd polarisiert und senkrecht zu dieser Richtung symmetrisch platziert sind, dadurch erreicht, dass zwischen zum Einsetzstück orientierten Kanten benachbarter Elektrodenlamellen unterschiedlicher Polarität eine freie Verbindung besteht.

Bei herkömmlichen Verfahren und Werkzeugen dieser Art waren zwischen den Lamellen Isolierlagen angeordnet. Diese hatten den Zweck, einen ungewollten Überschlag der elektrischen Spannung zu verhindern.

Der vorgestellte Aspekt basiert auf der überraschenden Erkenntnis, dass bei geeigneter Einstellung von Spannung, Abstand der Elektroden und Dicke der Elektroden ein Überschlag zwar nicht stattfindet, aber dennoch ein ausreichend starkes Feld erzeugt wird, um den Schweißvorgang durchzuführen.

Hierzu kann nach wie vor Isolierung zwischen den Elektrodenlamellen liegen. Unmittelbar an den Kanten, die zum Anliegen an das Werkstück bestimmt sind, oder zumindest an einem Teil dieser Kanten, sollte aber eine freie Sichtverbindung zwischen benachbarten Elektrodenlamellen bestehen.

Bevorzugt sind die Elektrodenlamellen des Ober- und/oder des Unterwerkzeugs beabstandet benachbart, aber ohne weitere Isolierung.

Die Erfindung wird nachstehend anhand dreier Ausführungsbeispiele unter Bezugnahme auf die Zeichnung näher erläutert. Funktional gleiche Elemente in den verschiedenen Figuren können gleiche Bezugsziffern tragen.

In der Zeichnung zeigen - jeweils schematisch -
- Figur 1: einen Schnitt durch ein Schweißwerkzeug mit einer geteilten Zentralelektrode und zwei eingelegten, noch nicht verschweißten Folien,
- Figur 2: ein Detail aus Figur 1,
- Figur 3: eine Draufsicht auf ein Werkzeug mit einer Beutelumfangsschweißelektrode,
- Figur 4: eine explodierte räumliche Ansicht eines Schweißwerkzeugs für ein Kabel, mit mehreren Elektrodenlamellen und ohne Zentralelektrode,
- Figur 5: das Werkzeug aus Figur 4 in einer Seitenansicht gemäß dortiger Kennzeichnung V-V,
- Figur 6: das Werkzeug aus den Figuren 4 und 5 nach einem Vorwärmvorgang und
- Figur 7: den Aufbau des HF-Feldes bei dem Werkzeug nach den Figuren 4 bis 6.

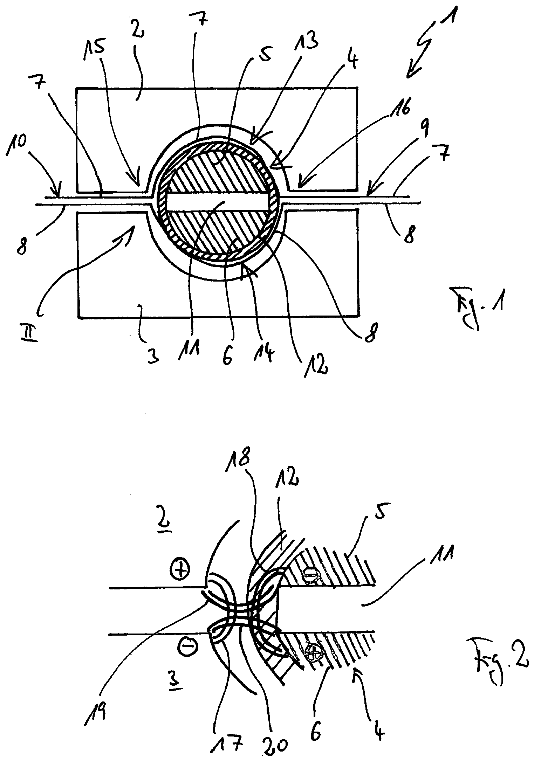

Das Schweißwerkzeug 1 in Figur 1 und 2 besteht im Wesentlichen aus einem Oberwerkzeug 2 und einem Unterwerkzeug 3. Diese sind jeweils als eine einteilige Elektroden ausgebildet.

Ebenfalls zum Werkzeug 1 gehört eine Zentralelektrode 4. Diese besteht aus einer oberen Elektrode 5 und einer unteren Elektrode 6. Diese beiden Elektroden sind symmetrisch aufgebaut bezüglich einer Ebene, welche zwischen einer oberen Folie 7 und einer unteren Folie 8 durch deren Flächenbereiche 9, 10 definiert wird.

Die obere Elektrode 5 und die untere Elektrode 6 der Zentralelektrode 4 bilden gemeinsam mit einem nicht-leitenden Kunststoffisolator 11 einen Vollkreisquerschnitt.

Es versteht sich, dass auch anderen Querschnitte vorteilhaft wären, beispielsweise in Form eines Ovals, eines Polygons, eines Rechtecks oder eines Quadrats.

Auf die Zentralelektrode 4 ist ein Schlauchstück 12 aufgesteckt. Das Schlauchstück 12 soll im Werkzeug 1 dicht in die beiden Folien 7, 8 eingeschweißt werden.

Da die Zentralelektrode 4 mit der oberen Elektrode 5 und der unteren Elektrode 6 zwei elektrisch geteilte Elektroden aufweist, können diese vom Werkzeug 1 unterschiedlich polarisiert werden. Somit sind insgesamt vier Elektroden vorhanden, welche eine dichte Verschweißung der oberen Folie 7 mit der unteren Folie 8 und zugleich zwischen den Folien 7, 8 und dem Schlauchstück 12 in einem einzigen Schweißvorgang ermöglichen.

Da das Werkzeug 1 sowohl hinsichtlich der Oberwerkzeugs 2 und des Unterwerkzeugs 3 als auch hinsichtlich der beiden Elektroden 5, 6 der Zentralelektrode 4 bezüglich der Trennebene zwischen der oberen Folie 7 und der unteren Folie 8 symmetrisch aufgebaut ist, stellt sich sowohl hinsichtlich des HF-Hauptfelds als auch hinsichtlich der HF-Streufelds ein symmetrischer Aufbau während des Schweißvorgangs ein. Die Verschweißung erfolgt daher sehr homogen.

Im Betrieb des Werkzeugs 1 erhält beispielsweise das Oberwerkzeug 2 eine HF-Polarität. Die obere Elektrode 5 der Zentralelektrode 4 erhält eine Masse-Polarität. Hierdurch stellt sich ein Hauptfeld zwischen dem Oberwerkzug 2 und der oberen Elektrode 5 der Zentralelektrode 4 ein, sodass an einem oberen Schlauchumfangsbereich 13 eine Hauptfeldverschweißung zwischen dem Schlauchstück 12 und der oberen Folie 7 erfolgt.

Gleichzeitig wird dem Unterwerkzeug 3 eine Masse-Polarität verliehen. Hierdurch stellt sich ein zweites, zeitgleiches Hauptfeld zwischen dem Oberwerkzeug 2 und dem Unterwerkzeug 3 ein, welches durch die flächigen Bereichen 9, 10 der oberen Folie 7 und der unteren Folie 8 hindurch verläuft. Hierdurch werden die beiden Folien 7, 8 in den flächigen Bereichen 9, 10, also benachbart zum Schlauchstück 12, mit einander sicher verschweißt.

Die untere Elektrode 6 der Zentralelektrode 4 erhält gleichzeitig eine HF-Polarität. Dies bewirkt - in zur oberen Hälfte im Werkzeug 1 symmetrischer Weise - eine gleichzeitige Hauptfeld-Verschweißung zwischen dem Schlauchstück 12 an dessen unterem Schlauchumfang 14 mit der unteren Folie 8.

Es kann also in nur einer einzigen Schweißpresse, nämlich dem Werkzeug 1, in nur einem Schweißzyklus sowohl für das Schlauchstück 12 als auch zwischen den Folien 7, 8 und mit nur einem einzigen Generator (nicht dargestellt) eine dichte und sicher reproduzierbare Verschweißung des in Figur 1 dargestellten Bereichs erfolgen.

Gerade in Übergangsbereichen 15, 16 zwischen den flächigen Bereichen 9, 10 der beiden Folien 7, 8 und dem Umfangsbereich 13, 14 des Schlauchstücks 12 erfolgt eine sehr intensive Verschweißung, da sich dort zusätzlich zu den drei Hauptfeldern zwischen den unterschiedlich polarisierten Elektroden noch vier Streufelder 17, 18, 19, 20 bilden, die sich genau in den Übergangsbereichen 15, 16 sogar überlappen und dort zu einer besonders intensiven Verschweißung führen.

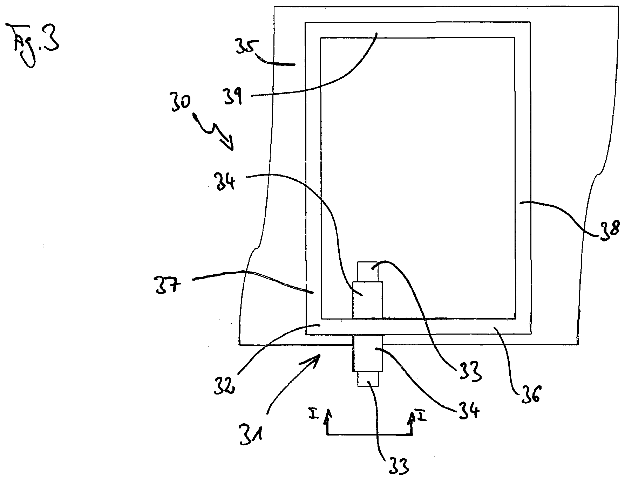

Das Werkzeug 30 in Figur 3 besteht an einem Beutelkopfbereich 31 aus einem rahmenförmigen Oberwerkzeug 32, einem identisch geformten Unterwerkzeug (durch das Oberwerkzeug 32 verdeckt) und einer Zentralelektrode 33 mit zwei Elektroden, wovon eine zum Oberwerkzeug 32 und eine zum Unterwerkzeug gerichtet ist.

Zwischen dem Oberwerkzeug 32 und dem Unterwerkzeug ist ein Schlauchstück 34 angeordnet. Dieses soll vom Werkzeug 30 in einem HF-Schweißvorgang mit einer unteren Folie 35 und einer oberen Folien (nicht dargestellt) dicht verbunden werden.

Hierzu liegen die obere Folie und die untere Folie 35 so, dass sie das Schlauchstück 34 einschließen. Auf der oberen Folie liegt das Oberwerkzeug 32. Unter der unteren Folie 35 liegt das Unterwerkzeug.

Anders als das Werkzeug 1 erstrecken sich das Oberwerkzeug 32 und das Unterwerkzeug des Werkzeugs 30 weit über den Beutelkopfbereich 31 neben dem Schlauchstück 34 hinaus. Im dargestellten Ausführungsbeispiel in Figur 3 zieht sich ein vorderer Elektrodenschenkel 36 über eine gesamte Breite eines zu erstellenden Beutels. Hieran schließen sich zwei Längsschenkel 37, 38 des Oberwerkzeugs 32 und des Unterwerkzeugs an. Diese gehen schließlich in einen Schenkel 39 für eine geschlossene Beutelbodenseite über.

Das Oberwerkzeug 32 und das Unterwerkzeug dienen somit nicht nur als Schlauchumfangselektroden um das Schlauchstück 34, sondern gleichzeitig als Beutelumfangselektroden zum Verschweißen des gesamten Beutels. Dies ist ein besonders vorteilhaftes Werkzeug.

Der Beutel ist nach dem Schweißvorgang hermetisch dicht, jedoch mit Ausnahme der Öffnung durch das Schlauchstück 34 hindurch, sobald die Zentralelektrode 33 nach dem Schweißvorgang aus dem Schlauchstück 34 entfernt ist.

Es sei ausdrücklich darauf hingewiesen, dass eine alternative, hier nicht dargestellte, vorteilhafte Konstruktion darin liegen kann, mehrere elektrisch geteilte Zentralelektroden an einem Werkzeug vorzusehen. Auf diese Weise können beispielsweise Beutel mit zwei schlauchförmigen Öffnungen erzeugt werden. Auch dies kann mit nur einem Generator erfolgen.

Bevorzugt ist ein Abschnitt einer Zentralelektrode, welcher nicht in einem Schlauchstück liegen soll, während der Schweißvorgang läuft, mit einem Isolator umgeben.

In einem detaillierten Konstruktionsbeispiel kann beispielsweise eine Folie mit einer Dicke von etwa 350 µm verwendet werden, um den Beutel zu bilden. Das Rohrstück kann aus PVC bestehen und einen Durchmesser von 6x8 mm haben. Für die Zentralelektrode würde in diesem Fall der Werkstoff VA mit einem Durchmesser von 6 mm vorgeschlagen. Als Separator eignen sich sehr gut die Werkstoff PTFE und/oder PP, beispielsweise mit einer Dicke von 600 µm.

Bei diesen Ausgangsdaten kann beispielsweise der Beutelverschlussbereich, also Folie auf Folie, eine geschweißte Enddicke von etwa 600 µm haben. Die radiale Dicke des Schlauchstücks mit daran angeschweißter Folie kann beispielsweise eine Enddicke von etwa 1000 µm haben.

Im Hauptfeld zwischen den beiden Folien, also direkt vom Oberwerkzeug zum Unterwerkzeug, kann beispielsweise eine Spannung von etwa 1.250 V anliegen, im Umfangsbereich um das Schlauchstück beispielsweise eine Spannung von etwa 1.500 V.

Die höhere Spannung an der Zentralelektrode kann einfach durch Vorsehen von beispielsweise zwei bis drei Windungen erreicht werden.

Als konstruktive Ausgestaltung einer elektrisch geteilten Zentralelektrode bietet sich beispielsweise ein durchgesägtes VA-Rohr an, welches mit einem unpolaren Isolationsmittel ausgegossen ist.

Alternativ lässt sich eine keramische bzw. unpolare Stange mit einer partiellen Metallisierung vorstellen. Hier sei beispielsweise Goldgalvano in Betracht gezogen.

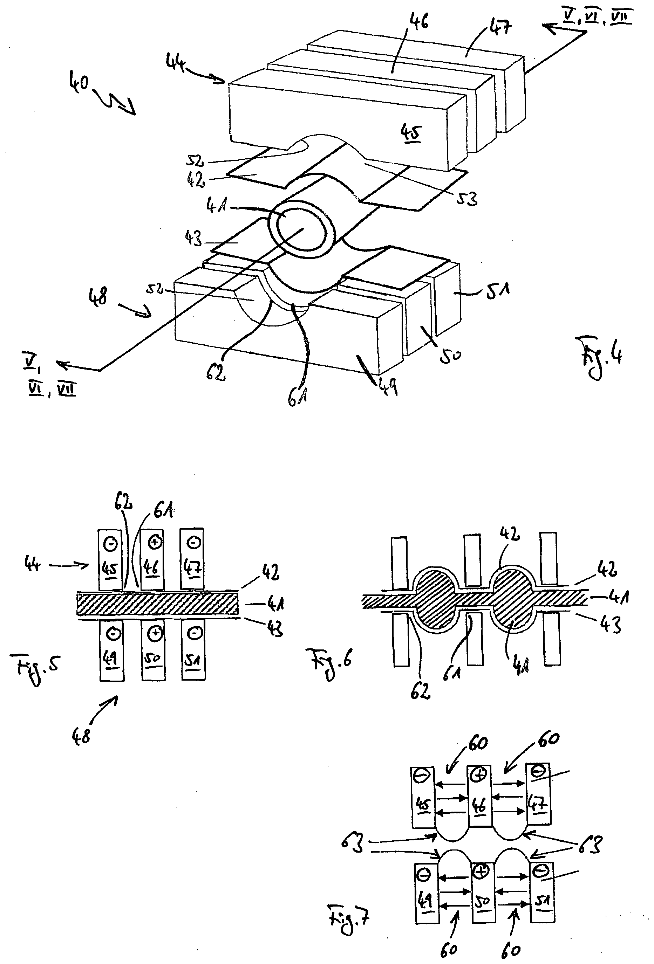

Es wurde vorstehend bereits erwähnt, dass auch reine Oberflächenschweißverfahren in der HF-Technik zum Verbinden eines Einsetzteils und zweier Folien zur Verwendung kommen können. Das Werkzeug 40 in den Figuren 4 bis 7 ist ein solches Werkzeug.

Im gezeigten Ausführungsbeispiel ist ein Kabelstück 41 zwischen eine obere Folie 42 und eine untere Folie 43 einzuschweißen.

An einem Oberwerkzeug 44 befinden sich benachbart eine erste obere Elektrode 45, eine zweite obere Elektrode 46 und eine dritte obere Elektrode 47. An einem Unterwerkzeug 48 befinden sich auf gleicher axialer Höhe eine erste untere Elektrode 49, eine zweite untere Elektrode 50 und eine dritte untere Elektrode 51.

Die Elektroden sind zur Aufnahme des Kabels 41 in einem zentralen Bereich mit Aussparungen 52 versehen. In Folge dessen können sie im Betrieb mit Druck flächig an die Oberfläche des Kabels 41 gepresst werden, wobei die Folien 42, 43 in halbzylinderförmigen Bereichen 53 hierzwischen unmittelbar eingepresst werden.

Da im Kabel 41 keine Zentralelektrode angeordnet werden kann, kann das Verschweißen nicht unmittelbar im Hauptfeld der Elektroden erfolgen. Das Verschweißen läuft wie folgt ab:

Die jeweils ersten und dritten Elektroden 45, 47, 49, 51 erhalten Masse-Polarität, während die jeweils zweiten Elektroden 46, 50 mit HF beaufschlagt werden.

Dies ist in der Ausgangssituation in Figur 5 dargestellt.

Während sich zwischen den ersten und zweiten Elektroden sowie zwischen den zweiten und dritten Elektroden Hauptfelder 60 ausbilden, entstehen zwischen Kanten 61, 62 (exemplarisch beziffert) der Elektroden Streufelder 63.

In den Streufeldern 63 wird das Werkstück vorplastifiziert. Der HF-Feldaufbau wie in Figur 7 dargestellt verbleibt während des gesamten Schweißvorgangs. Durch das Vorplastifizieren werden die Oberflächen sowohl der Folien 42, 43 als auch des Kabels 41 jedoch weich, sodass sich - auch in Folge des mechanischen Drucks über die Elektroden im Oberwerkzeug 44 und im Unterwerkzeug 48 - die Elektroden leicht in die Oberfläche des Werkstücks eindrücken. Dies ist übertrieben in Figur 6 dargestellt.

Dadurch, dass die Elektrodenkanten nun in die zu verschweißende Oberfläche hineingedrückt sind, rückt der Werkstoff des zu verschweißenden Materials zwischen die Elektroden in das Hauptfeld 60 hinein. Das im Vorschweißzyklus mit dem Streufeld 63 eingeformte Material kann nun im Hauptfeld 60 verschweißt werden.

Es sei angemerkt, dass das Kabel 41 und die Folien 42, 43 der besseren Übersichtlichkeit halber in Figur 7 nicht dargestellt sind, in der Praxis aber selbstverständlich dort vorhanden sind.

Mit anderen Worten ausgedrückt sind in Längsrichtung des Einsetzstückes mehrere Elektrodenplatten mit jeweils abwechselnder Polarität angeordnet, wobei einander gegenüber liegende Elektrodenplatten gleiche Polarität aufweisen. Die einzelnen Elektrodenplatten der Elektroden können dort, wo das Einsetzstück mit der Folie verschweißt werden soll, der Kontur des Einsetzstücks angepasst sein. Das Hauptfeld bildet sich bei diesen Elektroden zwischen den Elektrodenplatten der gleichen Elektrodenhälfte aus, während sich das Streufeld bogenförmig zwischen den Kanten benachbarter Elektrodenplatten ausbildet. Da die einzelnen Elektrodenplatten in sich einstückig ausgeführt sind, ergibt sich ein besonders einfacher Aufbau. Diese Elektrode eignet sich nicht nur für Schweißvorgänge ohne zusätzliche Zentralelektrode, sondern es kann auch eine zusätzliche Zentralelektrode vorhanden sein.

Allen dargestellten Ausführungsvarianten ist gemein, dass einander gegenüberliegende und durch die Folien voneinander getrennte Elektroden eine Anordnung aufweisen, bei welcher bezogen auf die durch die Berührungsfläche der Folien gebildete Trennebene sowohl das Hauptfeld als auch das Streufeld symmetrisch ausgebildet sind. Dies ist ermöglicht durch eine symmetrische Ausbildung der Elektroden, die auch ohne komplizierten Aufbau jeder einzelnen Elektrode zu beiden Seiten der Trennebene möglich ist.

Der Vollständigkeit halber sei noch erwähnt, dass der Innen- und Außendurchmesser eines Einsetzstücks unterschiedlich sein können. So kann beispielsweise ein Spritzgussteil mit schiffchenförmigem Außenquerschnitt und kreisrundem oder ovalem Innenquerschnitt zur Verwendung kommen.

Die Zentralelektrode kann ebenfalls einen von einem Kreis abweichenden Querschnitt haben, so beispielsweise mit einem Außenumfang in Form eines Ovals, eines Rechtecks oder eines Polygons.

## Patentansprüche

1. Werkzeug (1, 30) zum HF-Verschweißen eines Einsetzteils (12, 34) mit zwei Folien (7, 8, 35) zu einem Beutel, mit einem Oberwerkzeug (2, 32), einem Unterwerkzeug (3) und mehreren Zentralelektroden (4, 33),
***dadurch gekennzeichnet, dass***
jede der Zentralelektroden (4, 33) mehrere Elektroden (5, 6) aufweist,
welche als unterschiedliche Elektroden (5, 6) ausgestaltet und so am Werkzeug (1, 30) angeschlossen sind, dass sie sich unterschiedlich polarisieren lassen.

2. Werkzeug nach Anspruch 1, ***dadurch gekennzeichnet, dass*** eine Zentralelektrode (4, 33) eine elektrische Teilung aufweist.

3. Werkzeug nach Anspruch 1, ***dadurch gekennzeichnet, dass*** vier Elektroden (2, 3,5,6) vorgesehen sind, welche eine dichte Verschweißung zwischen den Folien (7, 8) und mit dem Einsetzteil (12) in einem Schweißvorgang ermöglichen.

4. Werkzeug nach Anspruch 1, ***dadurch gekennzeichnet*, *dass*** das Werkzeug (1, 30) dazu eingerichtet ist, ein bezüglich einer Trennebene symmetrisches Feld zu erzeugen, wobei mittels des Feldes eine dichte Verschweißung zwischen den Folien (7, 8) und mit dem Einsetzteil (12) in einem Schweißvorgang erreicht wird, wobei sich die Symmetrie bevorzugt hinsichtlich eines Hauptfeldes und eines Streufelds ausbildet.

5. Werkzeug nach Anspruch 1, ***dadurch gekennzeichnet, dass*** Elektroden (2, 3, 5, 6) des Werkzeugs (1) dazu eingerichtet sind, gleichzeitig drei Hauptfelder zu erzeugen, wovon eines die beiden Folien (7, 8) verschweißt, die anderen beiden hingegen das Einsetzteil (12) mit den Folien (7, 8), und zwar an unterschiedlichen Oberflächenbereichen (13, 14) des Einsetzteils (12).

6. Werkzeug nach einem der vorhergehenden Ansprüche, ***dadurch gekennzeichnet, dass*** die Zentralelektrode (4, 33) zwei Zentralelektroden-Elektroden aufweist, welche das Werkzeug (1, 30) unterschiedlich zu polarisieren eingerichtet ist.

7. Werkzeug nach einem der vorhergehenden Ansprüche, ***dadurch gekennzeichnet, dass*** zwei Zentralelektroden-Elektroden durch einen Separator voneinander elektrisch getrennt sind.

8. Werkzeug nach einem der vorhergehenden Ansprüche, ***dadurch gekennzeichnet, dass*** die Zentralelektrode (4, 33) aus einem geteilten Stab besteht, insbesondere aus einem geteilten Rundstab, wobei zwischen den Teilstücken ein Separator angeordnet ist.

9. Werkzeug nach einem der Ansprüche 1 bis 8, ***dadurch gekennzeichnet, dass*** die Zentralelektrode (4, 33) aus einem in Längsrichtung geteilten Rohr mit einer inneren Füllung aus Isoliermaterial aufgebaut ist, wobei das Isoliermaterial einen Separator bildet, welcher die einander gegenüberliegenden Rohrwandungen voneinander trennt.

10. Werkzeug nach einem der Ansprüche 1 bis 8, ***dadurch gekennzeichnet, dass*** die Zentralelektrode (4, 33) aus einem Stab aus unpolarem Material besteht, auf welchem Elektrodenbereiche durch galvanisch leitende Schichten gebildet sind, welche an ihren einander gegenüberliegenden längs laufenden Stoßstellen durch eine unpolare Trennschicht voneinander getrennt sind.

11. Werkzeug nach einem der vorhergehenden Ansprüche, ***dadurch gekennzeichnet, dass*** die mindestens zwei Zentralelektroden (4, 33) an einem Beutelumfang, vor allem an einem Beutelkopfbereich und/oder an einem Beutelbodenbereich, angeordnet sind.

12. Anordnung mindestens zweier Zentralelektroden (4, 33) gemeinsam mit einer Beutelumfangselektrode an einem Werkzeug (1, 30) nach einem der vorhergehenden Ansprüche.

13. Verwendung eines Werkzeugs (1, 30) nach einem der Ansprüche 1 bis 11 in einem HF-Schweißverfahren, bei welchem eine Verschweißung zwischen den Folien und mit dem Einsetzteil sowie entlang eines Beutelumfangs erfolgt.

## Claims

1. Die (1, 30) for HF welding of an insertion piece (12, 34) together with two films (7, 8, 35) to form a bag, with an upper die (2, 32), a lower die (3) and several central electrodes (4, 33),
***characterized in that***
each of the central electrodes (4, 33) has several electrodes (5, 6)
which are embodied as different electrodes (5, 6) and connected to the die (1, 30) such that they can receive different polarities.

2. Die according to Claim 1, ***characterized in that*** a central electrode (4, 33) has an electric splitting.

3. Die according to Claim 1, ***characterized in that*** four electrodes (2, 3, 5, 6) are provided which allow closely sealed welding between the films (7, 8) and with the insertion piece (12) in one welding process.

4. Die according to Claim 1, ***characterized in that*** the die (1, 30) is adapted to build up a field which is symmetrical with respect to a separation plane, where by means of the field closely sealed welding between the films (7, 8) and with the insertion piece (12) is achieved in one welding process, with the symmetry forming preferably with respect to one main field and one stray field.

5. Die according to Claim 1, ***characterized in that*** electrodes (2, 3, 5, 6) of the die (1) are adapted to build up three main fields simultaneously, one of which welds together the two films (7, 8) and the other two weld the insertion piece (12) together with the films (7, 8), namely at different surface regions (13, 14) of the insertion piece (12).

6. Die according to one of the above Claims, ***characterized in that*** the central electrode (4, 33) has two central electrode electrodes which the die (1, 30) is adapted to provide with different polarities.

7. Die according to one of the above Claims, ***characterized in that*** two central electrode electrodes are mutually electrically separated by a separator.

8. Die according to one of the above Claims, ***characterized in that*** the central electrode (4, 33) consists of a split rod, in particular a split round rod, with a separator being arranged between the parts.

9. Die according to one of Claims 1 through 8, ***characterized in that*** the central electrode (4, 33) consists of a tube split in the longitudinal direction and having an interior filling of insulating material, with the insulating material forming a separator which mutually separates the tube walls which are opposite each other.

10. Die according to one of Claims 1 through 8, ***characterized in that*** the central electrode (4, 33) consists of a rod made of non-polar material on which electrode regions are formed by galvanically conducting layers which are mutually separated by a non-polar separating layer on their mutually opposite longitudinal interfaces.

11. Die according to one of the above Claims, ***characterized in that*** the at least two central electrodes (4, 33) are arranged on a bag circumference, especially in a bag head region and/or in a bag bottom region.

12. Arrangement of at least two central electrodes (4, 33), together with a bag circumference electrode, on a die (1, 30) according to one of the above Claims.

13. Use of a die (1, 30) according to one of Claims 1 through 11 in an HF welding method in which welding is performed between the films and with the insertion piece and along a bag circumference.

## Revendications

1. Outil (1, 30) pour le soudage HF d'une pièce d'insertion (12, 34) avec deux films (7, 8, 35) en un sachet, avec un outil supérieur (2, 32), un outil inférieur (3) et plusieurs électrodes centrales (4, 33),
**caractérisé en ce que**
chacune des électrodes centrales (4, 33) comporte plusieurs électrodes (5, 6),
lesquelles sont conçues sous la forme d'électrodes (5, 6) différentes et sont raccordées sur l'outil (1, 30) de sorte à se laisser polariser différemment.

2. Outil selon la revendication 1, **caractérisé en ce qu'**une électrode centrale (4, 33) comporte un isolement électrique.

3. Outil selon la revendication 1, **caractérisé en ce que** quatre électrodes (2, 3, 5, 6) sont prévues, lesquelles permettent un soudage dense entre les films (7, 8) et avec la pièce d'insertion (12) en une opération de soudage.

4. Outil selon la revendication 1, **caractérisé en ce que** l'outil (1, 30) est ménagé pour créer un champ symétrique par rapport à un plan de séparation, au moyen du champ, un soudage dense entre les films (7, 8) et avec la pièce d'insertion (12) en une opération de soudage étant obtenu, la symétrie se créant de préférence au niveau d'un champ principal et d'un champ de dispersion.

5. Outil selon la revendication 1, **caractérisé en ce que** des électrodes (2, 3, 5, 6) de l'outil (1) sont ménagées pour créer simultanément trois champs principaux, dont l'un soude les deux films (7, 8), en revanche les deux autres soudent la pièce d'insertion (12) avec les films (7, 8), à savoir sur différentes zones superficielles (13, 14) de la pièce d'insertion (12).

6. Outil selon l'une quelconque des revendications précédentes, **caractérisé en ce que** l'électrode centrale (4, 33) comporte deux électrodes d'électrode centrale, que l'outil (1, 30) est ménagé pour polariser différemment.

7. Outil selon l'une quelconque des revendications précédentes, **caractérisé en ce que** deux électrodes d'électrode centrale sont électriquement isolées l'une de l'autre par un séparateur.

8. Outil selon l'une quelconque des revendications précédentes, **caractérisé en ce que** l'électrode centrale (4, 33) est constituée d'une barre divisée, notamment d'une barre ronde divisée, entre les pièces partielles étant placé un séparateur.

9. Outil selon l'une quelconque des revendications 1 à 8, **caractérisé en ce que** l'électrode centrale (4, 33) est constituée d'un tube divisé dans la direction longitudinale, avec un remplissage intérieur en matière isolante, la matière isolante formant un séparateur, lequel sépare l'une de l'autre les parois de tube mutuellement opposées.

10. Outil selon l'une quelconque des revendications 1 à 8, **caractérisé en ce que** l'électrode centrale (4, 33) est constituée d'une barre en matière homopolaire, sur laquelle des zones d'électrode sont formées par des couches électriquement conductrices, qui sur leurs zones d'aboutement opposées, s'écoulant en longueur sont séparées les unes des autres par une couche de séparation homopolaire.

11. Outil selon l'une quelconque des revendications précédentes, **caractérisé en ce que** les au moins deux électrodes centrales (4, 33) sont placées sur une périphérie du sachet, prioritairement sur une zone de tête du sachet et/ou sur une zone de base du sachet.

12. Agencement d'au moins deux électrodes centrales (4, 33) en commun avec une électrode périphérique du sachet sur un outil (1, 30) selon l'une quelconque des revendications précédentes.

13. Utilisation d'un outil (1, 30) selon l'une quelconque des revendications 1 à 11 dans un procédé de soudage HF, lors duquel il s'effectue un soudage entre les films et avec la pièce d'insertion, ainsi que le long de la périphérie du sachet.
